# EUROPEAN PATENT SPECIFICATION

(11) **EP 0 899 207 B1**
(45) Date of publication and mention of the grant of the patent: **04.12.2002**
(21) Application number: 98116323.1
(22) Date of filing: 28.08.1998
(51) Int. Cl.: B65D 75/00, B65D 75/58

(54) **Self-supporting package and method for producing the same**
Selbsttragende Verpackung und Verfahren zur deren Herstellung
Sac tenant debout et procédé pour la fabrication d'un sac tenant debout

(30) Priority: 01.09.1997 JP 23571397
(43) Date of publication of application: 03.03.1999
(73) Proprietor: SUMITOMO BAKELITE COMPANY LIMITED, Tokyo 140 (JP)
(72) Inventor: Yoshida, You c/o Sumitomo Bakelite Company Limited, Tokyo (JP)
(74) Representative: Vossius, Volker, Dr.

(56) References cited:
- EP-A- 0 052 151
- EP-A- 0 541 821
- WO-A-98/23498
- BE-A- 662 613
- DE-A- 1 436 818

## Description

The present invention relates to a self-supporting package particularly for beverages and for drinking the content through a straw, and to a method for producing the same.

At present, as beverage containers, mention may be made of cans, glass bottles, blown bottles, paper packs and the like, but they have both merits and demerits in productivity, handleability, saving of resources, refuse disposal, preservation, design and the like. Particularly, the paper packs to which straws are attached, are very popular and are supplied at a low price, while they have demerits that they lack variety in shapes and the content cannot be seen. Recently, soft packaging containers in the form of a bag made of laminated films which have injection-molded spouts and caps have been developed, and these have been provided mainly at the field of foods such as beverage containers of small capacity owing to their excellent functions such as preservation, heat resistance, saving of resources and reclosability. Such soft packaging containers with spouts are disclosed in JP-U-61-137539, JP-U-62-90353, JP-U-63-34070, and JP-U-63-171350.

However, structure of these soft packaging containers with spouts is complicated, because a bag formed of laminated film is combined with an injection-molded spout in order to assure the excellent functions, and naturally they are higher in cost than other containers of the same capacity. Furthermore, in the case of beverage containers of small capacity, mostly the content is drunk up at one time, and hence the functions given thereto are superfluous. Thus, cheaper containers have been desired from the point of price of the products as a whole. Moreover, the soft packaging containers with spouts are not suitable for contents which require sterilization at high temperatures, and containers which are not limited in their contents have been desired.

A bottom-gusseted bag having two side panels which together with a bottom folded inwardly in a V-shape form a "W" having four film layers is known from Hlavaty, EP-A-0 052 151. The bag comprises a top formed in accordance with the bottom and having oblique top seams, wherein one side panel and the adjacent V-arm of the top extend beyond the top cross rim and together form a socket having longitudinal seams.

Takagaki et al, EP-A-0 541 821, describe a self-supporting bag comprising a part constituting the trunk and a part constituting the bottom, both made of a multilayer plastic film comprising a heat adhesive plastic layer as the inner layer thereof. The inner plastic layer or the outer layer of the multilayer plastic film of the part constituting the trunk has a section comprising convex parts and concave parts and a surface having linear ribs.

Bags for beverages formed of thermoplastic films as well as a method for their manufacture are known from Lehmacher et al., BE-A-662 613, wherein such bags are preferably formed starting from a tube made of a thermoplastic material, which is to be folded laterally to form gussets for inserting a straw. Instead of using a gusseted tube, two tube webs in which the gussets are to be inserted separately may also be utilized.

WO 98/23498 (Smith et al.), filed prior to and published after the filing date of the present invention, discloses an easy to open flexible pouch having a wide-mouth pocket into which a straw can be inserted to pierce a frangible membrane for discharge of pouch contents.

The object of the present invention is to provide cheap self-supporting packages for drinking the content through a straw which are superior in heat resistance and can be subjected to sterilization at high temperatures.

In accordance with the invention this object is accomplished by providing a self-supporting package and a method for producing the self-supporting package according to claims 1 and 5, respectively.

Other features which are considered as characteristic for the invention are set forth in the appended claims.

The present invention relates to a self-supporting bag (1) which comprises a front material (2) and a back material (3) each consisting of a composite film having a seal layer and having flexibility, and a bottom material (4) consisting of said composite film and folded in the form of the letter W between the front material (2) and the back material (3), wherein a straw-thrusting film (6) consisting of said composite film is folded in the form of the letter M between the front material (2) and the back material (3) in inverse direction to the bottom material (4) and provided from one side seal to the other side seal of the self-supporting film (1), the straw-thrusting film (6) being heat-welded to either one of the front material (2) and the back material (3).

Furthermore, the present invention relates to a self-supporting package comprising said self-supporting bag (1) which is charged with a content and closed by sealing, wherein a seal part (7) is provided in the upper portion of the bag (1), said seal part (7) having an unsealed part (8) having a width of 2 mm or more in longitudinal direction including therein the upper edge of the straw-thrusting film (6) and a width in lateral direction within the width of the self-supporting bag (1).

Moreover, the present invention relates to a method for producing a self-supporting bag which comprises feeding a front material (2) and a back material (3) each consisting of a composite film having a seal layer and having flexibility so that the seal layers face each other, feeding a straw-thrusting film (6) consisting of said composite film between the front material (2) and the back material (3) with folding in half so that the seal layer faces outside, heat-welding the straw-thrusting film (6) to either one of the front material (2) and the back material (3) at a width narrower than the width of the straw-thrusting film (6) folded in half, feeding a bottom material (4) consisting of said composite film between the front material (2) and the back material (3) with folding in half so that the seal layer faces outside, and carrying out bottom sealing and side sealing.

In addition, the present invention relates to a method for producing a self-supporting package which comprises charging said self-supporting bag (1) with a content and closing the bag (1) by sealing at a seal part (7) provided in the upper portion of the bag (1), said seal part (7) having an unsealed part (8) having a width of 2 mm or more in longitudinal direction including the upper edge of the straw-thrusting film (6) and a width in lateral direction within the width of the self-supporting bag (1).
FIG. 1 is a front view showing an example of the self-supporting bag of the present invention.
FIG. 2 is a side sectional view showing an example of the self-supporting bag of the present invention.
FIG. 3 is a side sectional view showing an example of sealing method of the straw-thrusting film of the self-supporting bag according to the present invention.
FIG. 4 is a front view showing an example of sealing method of the self-supporting package according to the present invention.
FIG. 5 is a front view showing an example of the self-supporting package of the present invention.
FIG. 6 is a front view showing another example of the self-supporting package of the present invention.
FIG. 7 is a front view showing further another example of the self-supporting package of the present invention.

The reference numerals in these figures have the following meanings.
1: Self-supporting bag; 2: Front material; 3: Back material; 4: Bottom material; 5: opening; 6: Strawthrusting film; 7: Seal part; 8: Unsealed part; 9: Cutting off line; 11: Seal part of straw-thrusting film; 12: Bottom seal part; 13: Side seal portion; 14: Sealing hot platen; 15 Sealing pad; 16: Sealing hot platen.

The front material (2), the back material (3), the bottom material (4) and the straw-thrusting film (6) which constitute the self-supporting bag of the present invention each consist of a composite film having a seal layer and having flexibility. Preferably, the surface layer thereof consists of a polyamide film, a polyethylene terephthalate film or the like, and the seal layer thereof consists of a polyolefin film, an ethylene-vinyl acetate copolymer film or the like. When barrier property is needed, a film having barrier property such as an aluminum foil, an ethylene-vinyl alcohol copolymer film or the like is provided as an intermediate layer, or aluminum, aluminum oxide, silicon oxide or the like is vapor-deposited on the surface layer, or polyvinylidene chloride or the like is coated on the surface layer, thereby to protect the content.

Material of the straw-thrusting film of the present invention basically consists of the same material as that of the self-supporting bag per se, but for easy thrusting of a straw, thickness of the film may be made thinner within the range causing no problem in the performance of the bag or the surface layer may be omitted as far as no problem is caused in the performance. Furthermore, it may be made easier to thrust a straw through the straw-thrusting film by making innumerable fine holes through the surface layer.

In the self-supporting bag of the present invention, the position of the straw-thrusting film to be inserted is such that the upper edge of the straw-thrusting film folded in half is positioned at a distance of 1-50 mm, preferably 15-30 mm below the upper edge of the self-supporting bag. Width of the straw-thrusting film in the state of being folded in half is 5-40 mm, preferably 10-20 mm. The position of the lower edge of the closing seal after charging of the content is 1 mm or more above the lower edge of the straw-thrusting film and not more than the width of the straw-thrusting film and preferably in the range of 3-10 mm. The size of the unsealed part in the seal part is such that the lower edge thereof is in the range of 0-30 mm, preferably 0-3 mm, below the upper edge of the straw-thrusting film and the upper edge of the unsealed part is in the range of 2-40 mm, preferably 5-10 mm, above the upper edge of the straw-thrusting film.

According to the self-supporting package of the present invention, since it is in the form of self-supporting bag consisting of a composite film, it is superior in suitability for the content such as preservation and heat resistance and has self-supporting property and variety of the shapes, and besides, in some case, the content can be seen. Furthermore, since the content can be drunk through a straw, the container per se is not complicated and the container can be supplied cheaply.

Moreover, since sterilization at high temperatures is possible, the contents are not limited to only those which are sterilized at about 85°C and charged in the soft packaging containers with spouts and can be more freely selected, and development of beverages in the new field can be expected.

### Example

The present invention will be illustrated below referring to the accompanying drawings.

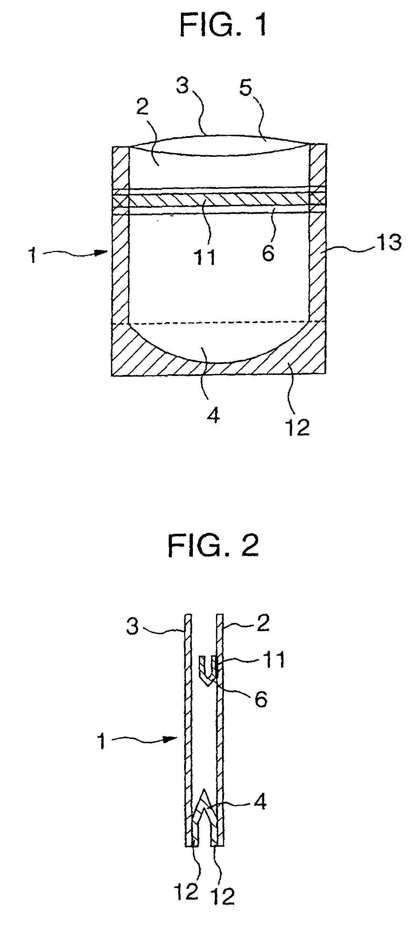

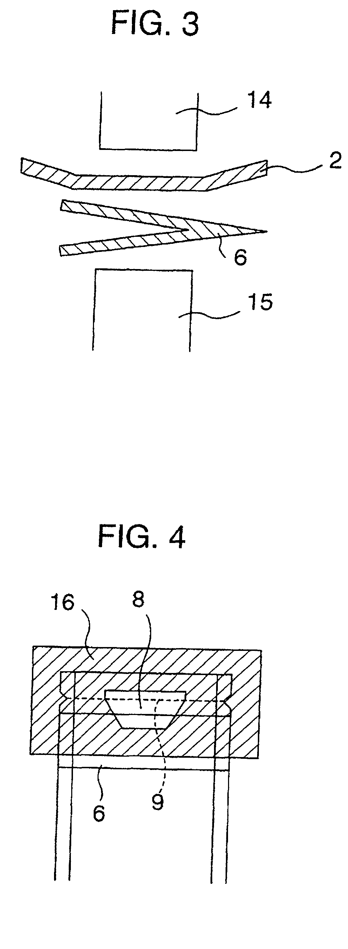

FIG. 1 and FIG. 2 show one example of the self-supporting bag of the present invention. The front material 2, the back material 3 and the bottom material 4 formed in the form of the letter W between the front and back materials in the self-supporting bag 1 each consist of a polyethylene terephthalate film of 12 µm, an aluminum foil of 7 µm, a nylon film of 15 µm and a polyethylene film of 60 µm in succession from the surface layer toward the seal layer. First, the straw-thrusting film 6 consisting of a polyethylene terephthalate film of 12 µm, an aluminum foil of 7 µm, and a polyethylene film of 40 µm in succession from the surface layer toward the seal layer is folded with the seal layer facing outside between the front material 2 and the back material 3 in such a manner that the film 6 folded in half in the form of the letter M just in inverse direction to the bottom material 4 has a width of 15 mm and the upper edge thereof is positioned at 20 mm below the opening 5 of the upper edge of the self-supporting bag. Then, as shown in FIG. 3, the front material 2 and the straw-thrusting film 6 are sealed to give the seal 11 which is in the range of from 2 mm below the upper edge of the straw-thrusting film 6 to 5 mm above the lower edge of the straw-thrusting film 6. Thereafter, between the front material 2 and the back material 3, the bottom material 4 is folded with the seal layer facing outside in the form of the letter W, and the bottom sealing 12 and side sealing 13 are performed to produce the self-supporting bag 1.

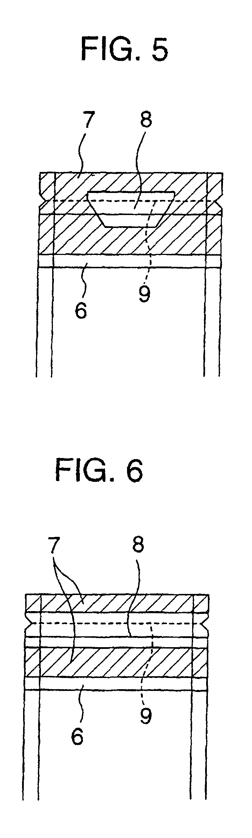

In the self-supporting bag 1 mentioned above, the content is charged from the opening 5 formed between the straw-thrusting film 6 and the back material 3 which is not sealed to the film 6, and sealing is performed using a sealing plate 16 as shown in FIG. 4 to form a self-supporting package. As shown in FIG. 5, FIG. 6 or FIG. 7, the seal part 7 has a seal width ranging from the upper edge of the self-supporting bag 1 to 5 mm above the lower edge of the straw-thrusting film 6. An unsealed part 8 is provided in the seal part 7, and the lower edge of the unsealed part 8 is positioned at 2 mm below the upper edge of the straw-thrusting film 6 and the upper edge of the unsealed part 8 is positioned at 10 mm above the upper edge of the straw-thrusting film 6.

Furthermore, in the self-supporting package, when the bag 1 is sealed for closing, a cutting off line 9 which passes through the unsealed part 8 is provided at the position of 5 mm above the upper edge of the straw-thrusting film 6 in correspondence to the seal part 7.

In order to make easier to thrust a straw through the straw-thrusting film 6, thickness of the film 6 can be made thinner so far as no problem is caused in the properties of the container, or fine holes can be formed through only the surface layer constituting the straw-thrusting film 6. Moreover, the film 6 can be composed only of the barrier layer and the seal layer by omitting the surface layer.

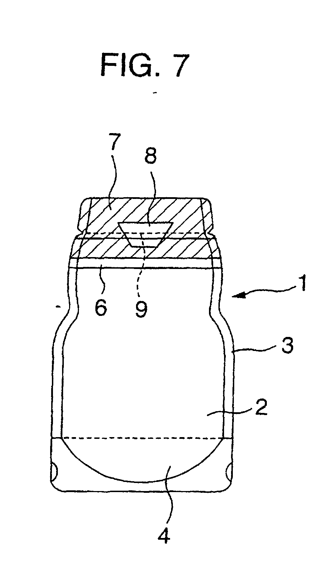

The content contained in the self-supporting package of the present invention as shown in FIG. 7 can be drunk only by cutting off the upper seal part at the cutting off line 9, inserting a straw from the unsealed part 8 and thrusting the straw through the straw-thrusting film 6.

## Claims

1. A self-supporting package (1) comprising
a front material (2) and a back material (3),
a bottom material (4) folded in the form of an inverse V between the front material (2) and the back material (3), and
a straw-thrusting film (6) folded in the form of the letter V between the front material (2) and the back material (3) in inverse direction to the bottom material (4) and provided from one side seal to the other side seal of the package (1),
wherein the front material (2), the back material (3), the bottom material (4) and the straw-thrusting film (6) each consists of a film having a seal layer and having flexibility, wherein the seal layer of the straw-thrusting film (6) is heat-welded to either one of the front material (2) and the back material (3),
and a seal part (7) is provided in the upper portion of the package (1) for closing said package, **characterized in that** the front material (2), the back material (3), the bottom material (4) and the straw-thrusting film (6) each consists of a composite film **in that** the upper edge of the straw-thrusting film (6) is positioned below the upper edge of the package (1), and **in that** said seal part (7) has an unsealed part (8) having a width of 2 mm or more in longitudinal direction including therein the upper edge of the straw-thrusting film (6) and a width in lateral direction within the width of the package (1).

2. A self-supporting package according to claim 1, wherein the composite film comprises a surface layer consisting of a polyamide film, a polyethylene terephthalate film or a combination of them, and a seal layer consisting of a polyolefin film, an ethylene-vinyl acetate copolymer film or a combination of them.

3. A self-supporting package according to claim 2, wherein the composite film has an intermediate layer consisting of an aluminum foil, an ethylene-vinyl alcohol copolymer film or a combination of them between the surface layer and the seal layer.

4. A self-supporting package according to claim 2, wherein aluminum, aluminum oxide, silicon oxide or a combination of them is vapor-deposited on the surface layer or polyvinylidene chloride is coated on the surface layer.

5. A method for producing a self-supporting package according to claim 1 which comprises feeding a front material (2) and a back material (3) each consisting of a composite film having a seal layer and having flexibility so that the seal layers face each other, feeding a straw-thrusting film (6) consisting of said composite film between the front material (2) and the back material (3) with folding in half so that the seal layer faces outside, heat-welding the straw-thrusting film (6) to either one of the front material (2) and the back material (3) at a width narrower than the width of the straw-thrusting film (6) folded in half, feeding a bottom material (4) consisting of said composite film between the front material (2) and the back material (3) with folding in half so that the seal layer faces outside, and carrying out bottom sealing and side sealing, charging the so-obtained package (1) with a content, and closing the package at a seal part (7) provided in the upper portion of the package (1), said seal part (7) having an unsealed part (8) having a width of 2 mm or more in longitudinal direction including therein the upper edge of the straw-thrusting film (6) and a width in lateral direction within the width of the package (1).

6. A method for producing a self-supporting package according to claim 5, wherein the composite film comprises a surface layer consisting of a polyamide film, a polyethylene terephthalate film or a combination of them, and a seal layer consisting of a polyolefin film, an ethylene-vinyl acetate copolymer film or a combination of them.

7. A method for producing a self-supporting package according to claim 6, wherein the composite film has an intermediate layer consisting of an aluminum foil, an ethylene-vinyl alcohol copolymer film or a combination of them between the surface layer and the seal layer.

8. A method for producing a self-supporting package according to claim 6, wherein aluminum, aluminum oxide, silicon oxide or a combination of them is vapor-deposited on the surface layer or polyvinylidene chloride is coated on the surface layer.

## Patentansprüche

1. Selbsttragende Verpackung (1), umfassend
ein Vorderseitenmaterial (2) und ein Rückseitenmaterial (3),
ein Bodenmaterial (4), das in Form eines umgekehrten V zwischen dem Vorderseitenmaterial (2) und dem Rückseitenmaterial (3) gefaltet ist, und
eine von einem Strohhalm zu durchstoßende Folie (6), die in Form des Buchstabens V zwischen dem Vorderseitenmaterial (2) und dem Rückseitenmaterial (3) in umgekehrter Richtung zu dem Bodenmaterial (4) gefaltet und von einer Seitenabdichtung zu der anderen Seitenabdichtung der Verpackung (1) bereitgestellt ist, wobei das Vorderseitenmaterial (2), das Rückseitenmaterial (3), das Bodenmaterial (4) und die von einem Strohhalm zu durchstoßende Folie (6) jeweils aus einer Folie bestehen, die eine Dichtungsschicht aufweist und flexibel ist, wobei die Dichtungsschicht der von einem Strohhalm zu durchstoßenden Folie (6) entweder an das Vorderseitenmaterial (2) oder an das Rückseitenmaterial (3) angeschweißt ist,
und ein Abdichtungsteil (7), der in dem oberen Abschnitt der Verpackung (1) zum Schließen der Verpackung bereitgestellt ist, **dadurch gekennzeichnet, dass** das Vorderseitenmaterial (2), das Rückseitenmaterial (3), das Bodenmaterial (4) und die von einem Strohhalm zu durchstoßende Folie (6) jeweils aus einer Verbundfolie bestehen, dass die obere Kante der von einem Strohhalm zu durchstoßenden Folie (6) unterhalb der oberen Kante der Verpackung (1) angeordnet ist, und dass der Abdichtungsteil (7) einen nicht abgedichteten Teil (8) mit einer Breite von 2 mm oder mehr in der Längsrichtung, worin die obere Kante der von einem Strohhalm zu durchstoßenden Folie (6) eingeschlossen ist, und einer Breite in Seitenrichtung innerhalb der Breite der Verpackung (1) aufweist.

2. Selbsttragende Verpackung nach Anspruch 1, wobei die Verbundfolie eine Oberflächenschicht, die aus einer Polyamid-Folie, einer Polyethylenterephthalat-Folie oder aus einer Kombination davon besteht, und eine Dichtungsschicht umfasst, die aus einer Polyolefin-Folie, einer Ethylen-Vinylacetat-Copolymer-Folie oder aus einer Kombination davon besteht.

3. Selbsttragende Verpackung nach Anspruch 2, wobei die Verbundfolie eine Zwischenschicht zwischen der Oberflächenschicht und der Dichtungsschicht aufweist, die aus einer Aluminium-Folie, einer Ethylen-Vinylalkohol-Copolymer-Folie oder aus einer Kombination davon besteht.

4. Selbsttragende Verpackung nach Anspruch 2, wobei Aluminium, Aluminiumoxid, Siliziumoxid oder eine Kombination davon auf die Oberflächenschicht aufgedampft oder Polyvinylidenchlorid auf die Oberflächenschicht aufgebracht ist.

5. Verfahren zur Herstellung einer selbsttragenden Verpackung nach Anspruch 1, umfassend das Zuführen eines Vorderseitenmaterials (2) und eines Rückseitenmaterials (3), die jeweils aus einer Verbundfolie bestehen, die eine Dichtungsschicht aufweist und flexibel ist, so dass die Dichtungsschichten sich gegenüber liegen, Zuführen einer von einem Strohhalm zu durchstoßenden Folie (6), die aus der Verbundfolie besteht, zwischen das Vorderseitenmaterial (2) und das Rückseitenmaterial (3), wobei diese in der Hälfte gefaltet wird, so dass die Dichtungsschicht nach außen liegt, Verschweißen der von einem Strohhalm zu durchstoßenden Folie (6) entweder an das Vorderseitenmaterial (2) oder an das Rückseitenmaterial (3) bei einer Breite, die schmaler als die Breite der in der Hälfte gefalteten von einem Strohhalm zu durchstoßenden Folie (6) ist, Zuführen eines Bodenmaterials (4), das aus der Verbundfolie besteht, zwischen das Vorderseitenmaterial (2) und das Rückseitenmaterial (3), wobei dieses in der Hälfte gefaltet wird, so dass die Dichtungsschicht nach außen liegt, und Durchführen der Boden- und Seitenabdichtung, Beschicken der so erhaltenen Verpackung (1) mit einem Inhalt, und Schließen der Verpackung an einem Abdichtungsteil (7), der in dem oberen Abschnitt der Verpackung (1) bereitgestellt wird, wobei der Abdichtungsteil (7) einen nicht abgedichteten Teil (8) mit einer Breite von 2 mm oder mehr in der Längsrichtung, worin die obere Kante der von einem Strohhalm zu durchstoßenden Folie (6) eingeschlossen ist, und einer Breite in Seitenrichtung innerhalb der Breite der Verpackung (1) aufweist.

6. Verfahren zur Herstellung einer selbsttragenden Verpackung nach Anspruch 5, wobei die Verbundfolie eine Oberflächenschicht, die aus einer Polyamid-Folie, einer Polyethylen-Terephthalat-Folie oder einer Kombination davon besteht, und eine Dichtungsschicht umfasst, die aus einer Polyolefin-Folie, einer Ethylen-Vinylacetat-Copolymer-Folie oder einer Kombination davon besteht.

7. Verfahren zur Herstellung einer selbsttragenden Verpackung nach Anspruch 6, wobei die Verbundfolie eine Zwischenschicht zwischen der Oberflächenschicht und der Dichtungsschicht aufweist, die aus einer Aluminium-Folie, einer Ethylen-Vinylalkohol-Copolymer-Folie oder einer Kombination davon besteht.

8. Verfahren zur Herstellung einer selbsttragenden Verpackung nach Anspruch 6, wobei Aluminium, Aluminiumoxid, Siliziumoxid oder eine Kombination davon auf die Oberflächenschicht aufgedampft wird oder Polyvinylidenchlorid auf die Oberflächenschicht aufgebracht wird.

## Revendications

1. Emballage autoportant (1) comprenant
un matériau avant (2) et un matériau arrière (3),
un matériau de fond (4) replié en forme de V inversé entre le matériau avant (2) et le matériau arrière (3), et
un film destiné à être percé par une paille (6), replié en forme de lettre V, entre le matériau avant (2) et le matériau arrière (3) dans la direction inverse de celle du matériau de fond (4) et allant de la soudure d'un côté à la soudure de l'autre côté de l'emballage (1),
dans lequel le matériau avant (2), le matériau arrière (3), le matériau de fond (4) et le film destiné à être percé par une paille (6) sont chacun constitués d'un film comportant une couche d'étanchéité et présentant une flexibilité, où la couche d'étanchéité du film destiné à être percé par une paille (6) est thermosoudée soit au matériau avant (2), soit au matériau arrière (3),
et une pièce soudée (7) est placée dans la partie supérieur de l'emballage (1) pour fermer ledit emballage,
**caractérisé en ce que** le matériau avant (2), le matériau arrière (3), le matériau de fond (4) et le film destiné à être percé par une paille (6) sont chacun constitués d'un film composite, **en ce que** le bord supérieur du film destiné à être percé par une paille (6) est placé au-dessous du bord supérieur de l'emballage (1), et **en ce que** ladite pièce soudée (7) possède une pièce non soudée (8) ayant une largeur de 2 mm ou plus dans la direction longitudinale, y compris le bord supérieur du film destiné à être percé par une paille (6), et une largeur dans la direction latérale ne dépassant pas la largeur de l'emballage (1).

2. Emballage autoportant selon la revendication 1, dans lequel le film composite comprend une couche superficielle constituée d'un film de polyamide, d'un film de poly(éthylène-téréphtalate) ou d'une combinaison des deux, et une couche d'étanchéité constituée d'un film de polyoléfine, d'un film de copolymère éthylène-acétate de vinyle ou d'une combinaison des deux.

3. Emballage autoportant selon la revendication 2, dans lequel le film composite comporte une couche intermédiaire constituée d'une feuille d'aluminium, d'un film de copolymère éthylène-alcool vinylique ou d'une combinaison des deux entre la couche superficielle et la couche d'étanchéité.

4. Emballage autoportant selon la revendication 2, dans lequel de l'aluminium, de l'oxyde d'aluminium, de l'oxyde de silicium ou une combinaison d'entre eux est déposé en phase vapeur sur la couche superficielle ou un revêtement de poly(chlorure de vinylidène) est appliqué sur la couche superficielle.

5. Procédé de production d'un emballage autoportant selon la revendication 1, qui comprend le fait d'amener un matériau avant (2) et un matériau arrière (3), chacun étant constitué d'un film composite comportant une couche d'étanchéité et présentant une flexibilité, de manière que les couches d'étanchéité se fassent face, amener un film destiné à être percé par une paille (6) constitué dudit film composite entre le matériau avant (2) et le matériau arrière (3) en le repliant en deux de manière que la couche d'étanchéité soit tournée vers l'extérieur, thermosouder le film destiné à être percé par une paille (6) soit au matériau avant (2), soit au matériau arrière (3), à une largeur plus étroite que la largeur du film destiné à être percé par une paille (6) plié en deux, amener un matériau de fond (4) constitué dudit film composite entre le matériau avant (2) et le matériau arrière (3) en le repliant en deux de manière que la couche d'étanchéité soit tournée vers l'extérieur, et réaliser le soudage du fond et le soudage des côtés, charger un contenu dans l'emballage (1) ainsi obtenu et fermer l'emballage au niveau d'une pièce soudée (7) placée dans la partie supérieure de l'emballage (1), ladite pièce soudée (7) possédant une pièce non soudée (8) ayant une largeur de 2 mm ou plus dans la direction longitudinale, y compris le bord supérieur du film destiné à être percé par une paille (6), et une largeur dans la direction latérale ne dépassant pas la largeur de l'emballage (1).

6. Procédé de production d'un emballage autoportant selon la revendication 5, dans lequel le film composite comprend une couche superficielle constituée d'un film de polyamide, d'un film de poly(éthylène-téréphtalate) ou d'une combinaison des deux, et une couche d'étanchéité constituée d'un film de polyoléfine, d'un film de copolymère éthylène-acétate de vinyle ou d'une combinaison des deux.

7. Procédé de production d'un emballage autoportant selon la revendication 6, dans lequel le film composite comporte une couche intermédiaire constituée d'une feuille d'aluminium, d'un film de copolymère éthylène-alcool vinylique ou d'une combinaison des deux entre la couche superficielle et la couche d'étanchéité.

8. Procédé de production d'un emballage autoportant selon la revendication 6, dans lequel de l'aluminium, de l'oxyde d'aluminium, de l'oxyde de silicium ou une combinaison d'entre eux est déposé en phase vapeur sur la couche superficielle ou un revêtement de poly(chlorure de vinylidène) est appliqué sur la couche superficielle.
